# FASCICULE DE BREVET EUROPEEN

(11) **EP 4 384 726 B1**
(45) Date de publication et mention de la délivrance du brevet: **25.03.2026**
(21) Numéro de dépôt: 22743512.0
(22) Date de dépôt: 20.07.2022
(51) Int. Cl.: F16D 3/06, F16C 3/035, F16C 29/04, F16C 33/40, H02K 7/116, H02K 21/24

(54) **ACCOUPLEMENT D'ARBRES ROTATIFS PERMETTANT UN DÉPLACEMENT AXIAL AU MOYEN D'ÉLÉMENTS ROULANTS**
KUPPLUNG FÜR DREHENDE WELLEN, DIE MITTELS WÄLZLKÖRPERN EINE AXIALE VERSETZUNG ERMÖGLICHT
COUPLING FOR ROTATING SHAFTS ALLOWING AXIAL DISPLACEMENT BY MEANS OF ROLLING ELEMENTS

(30) Priorité: 10.08.2021 FR 2108612
(43) Date de publication de la demande: 19.06.2024
(73) Titulaire: Ampere SAS, 92100 Boulogne-Billancourt (FR)
(72) Inventeur: RAOUL, Michel, 78084 GUYANCOURT CEDEX (FR)
(74) Mandataire: Renault Group
(86) Numéro de dépôt international: PCT/EP2022/070315
(87) Numéro de publication internationale: WO 2023/016763

(56) Documents cités:
- EP-A1- 1 930 610
- WO-A1-2017/001308
- WO-A1-2020/225582
- JP-A- 2005 324 599
- JP-A- 2007 192 340
- US-A1- 2004 063 536
- US-A1- 2013 072 311

## Description

### DOMAINE TECHNIQUE DE L'INVENTION

La présente invention concerne de manière générale la transmission mécanique d'un couple.

Elle concerne plus particulièrement un dispositif de couplage de deux arbres, comportant :
- des éléments roulants adaptés à être engagés dans des rainures prévues dans les arbres, et
- un socle de maintien adapté à maintenir en position relative les éléments roulants engagés dans les rainures.

Elle concerne également un groupe motopropulseur comportant :
- une machine électrique qui comprend un arbre de sortie,
- un réducteur de vitesse (tel qu'une boîte de vitesse à plusieurs rapports, un réducteur mécanique mono-rapport...) comprenant un arbre primaire, et
- un dispositif de couplage d'arbres tel que précité, permettant de transmettre le couple entre l'arbre de sortie et l'arbre primaire.

L'invention trouve une application particulièrement avantageuse dans un groupe motopropulseur hybride, notamment pour véhicule automobile. Elle est plus particulièrement avantageuse encore lorsque le groupe motopropulseur comporte une machine électrique à flux axial, mais s'applique également dans un groupe motopropulseur à machine électrique à flux radial.

### ETAT DE LA TECHNIQUE

Un véhicule automobile électrique ou hybride comporte un groupe motopropulseur qui comprend une machine électrique couplée à un réducteur de vitesse, ce dernier pouvant être un simple mécanisme de pignonnerie, un variateur, une boîte de vitesses. Quelques exemples de l'état de l'art sont divulguées dans les documents EP 1930610 A1, WO 2017/001308 A1 et WO 2020/225582.

La machine électrique comporte alors un rotor qui est monté sur un arbre de sortie, lequel est connecté à l'entrée du réducteur, et plus précisément à son arbre primaire.

A titre d'exemple, la machine électrique peut être du type à flux axial et comporter un rotor flanqué de deux stators. Les stators sont alors légèrement écartés du rotor pour éviter tout frottement. Ainsi, de chaque côté du rotor se trouve un espace appelé entrefer.

La performance de la machine électrique dépend de la valeur de ces entrefers, de leurs constances tout autour de l'axe de rotation du rotor, et de la symétrie de ces entrefers de part et d'autre du rotor.

La moindre erreur de géométrie a des conséquences sur les performances du moteur et sur sa durée de vie. Par exemple, puisque la machine électrique est du type à flux axial, on comprend qu'une différence de valeurs entre les deux entrefers provoque une attraction du rotor par le stator le plus proche. Cet effort peut être important. Il peut en outre être cyclique et entrainer une fatigue des matériaux composant la machine électrique. Les roulements de soutien du rotor sont aussi davantage sollicités et nécessitent d'être dimensionnés en fonction de ces sollicitations. Un tel dimensionnement occasionne un surpoids et des frais importants.

Ces problèmes sont inhérents au concept même de machine électrique à flux axial. Ils peuvent être provoqués ou accrus par des contraintes extérieures provenant du réducteur. En effet, les pignons employés dans le réducteur ont en général des dentures hélicoïdales qui exercent des poussées axiales pouvant provoquer des déplacements dans la machine électrique, et donc des variations de taille des entrefers.

C'est la raison pour laquelle le couplage entre l'arbre de sortie de la machine électrique et l'arbre primaire du réducteur est généralement réalisé au moyen de cannelures permettant un coulissement de ces deux arbres l'un par rapport à l'autre.

L'inconvénient d'une telle liaison mécanique est que tout défaut d'alignement entre la sortie de la machine électrique et l'entrée du réducteur est susceptible d'empêcher les cannelures de librement coulisser les unes dans les autres, ce qui peut provoquer des déplacements de composants dans la machine électrique. Même si ce déplacement se limite à quelques dixièmes de millimètres, il pourra occasionner une perte importante de puissance (particulièrement dans le cas où la machine est à flux axial) et une chute sensible de la durée de vie de la machine électrique et de ses roulements (dans tous les cas).

### PRESENTATION DE L'INVENTION

Pour remédier à ce problème, la présente invention propose non pas de dimensionner les différents composants du groupe motopropulseur en fonction de ces contraintes, mais plutôt d'introduire un dispositif mécanique entre la sortie de la machine électrique et l'entrée du réducteur qui ne transmette pas les efforts axiaux dus à un défaut d'alignement entre la sortie de la machine électrique et l'entrée du réducteur.

Plus particulièrement, on propose selon l'invention un dispositif de couplage tel que défini dans l'introduction, dans lequel le socle de maintien comporte une partie de jonction à partir de laquelle s'étendent plusieurs bras parallèles qui portent chacun au moins deux moyens de retenu adaptés à maintenir en position relative deux éléments roulants.

Ainsi, grâce à l'invention, le dispositif de couplage forme par exemple une sorte de « coulisse à billes » et le socle de maintien forme une sorte de « cage ».

La forme de ce socle de maintien est particulière et est ainsi peu encombrante, ce qui permet d'augmenter significativement la profondeur des rainures pratiquées dans les arbres à coupler et le nombre d'éléments roulants dans un même espace. Dès lors, le dispositif de couplage est en mesure de transmettre des couples très élevés.

Par ailleurs, tout défaut d'alignement ou tout déplacement axial entre l'arbre primaire et l'arbre de sortie pourra être repris par les éléments roulants, qui empêcheront toute transmission d'effort axial entre ces deux arbres.

De ce fait, ces défauts seront sans effet sur la géométrie interne de la machine électrique, et notamment sur les caractéristiques géométriques des entrefers. Ainsi, la performance de la machine électrique et la durée de vie des roulements pourront être préservés.

D'autres caractéristiques avantageuses et non limitatives du dispositif conforme à l'invention, prises individuellement ou selon toutes les combinaisons techniquement possibles, sont les suivantes :
- ladite partie de jonction présente un bord périphérique à partir duquel s'étendent lesdits bras ;
- lesquels bras s'étendant tous sur un même côté de la partie de jonction ;
- le socle de maintien comporte un nombre de bras qui est au moins égale à trois, qui est préférentiellement au moins égal à six, et qui est de façon plus préférentielle encore égal à huit ;
- il est prévu un nombre d'éléments roulants pour chaque bras qui est compris entre trois et cinq, et qui est de préférence égal à quatre ;
- le moyen de retenu de chaque élément roulant comporte deux doigts qui sont placés de part et d'autre de l'élément roulant et qui s'étendent en saillie de l'une des faces du bras.

L'invention porte également sur un groupe motopropulseur tel que défini en introduction, dans lequel :
- l'un des arbre de sortie et arbre primaire présente une extrémité creuse et l'autre des arbre de sortie et arbre primaire présentant une première extrémité qui est engagée à l'intérieur de ladite extrémité creuse,
- le dispositif de couplage est tel que précité et comporte des éléments roulants engagés dans des rainures pratiquées en creux sur ladite première extrémité et dans ladite extrémité creuse, lesdites rainures s'étendant longitudinalement selon des axes parallèles à un axe de rotation de l'arbre de sortie.

D'autres caractéristiques avantageuses et non limitatives du groupe motopropulseur conforme à l'invention, prises individuellement ou selon toutes les combinaisons techniquement possibles, sont les suivantes :
- les rainures présentent, sur une partie au moins de leurs longueurs accueillant les éléments roulants, des sections uniformes en arc-de-cercle d'angles d'ouverture supérieures à 160°, de préférence compris entre 165° et 175° ;
- l'extrémité creuse est portée par l'arbre de sortie, lequel arbre de sortie est formé d'au moins deux pièces, dont l'une forme une bague à l'intérieur de laquelle sont réalisées les rainures, lesdites rainures s'étendant sur toute la longueur de la bague ;
- la première extrémité est portée par l'arbre primaire, et les rainures sont réalisées sur un manchon qui est fixé sur une autre partie de l'arbre primaire, ledit manchon présentant une portion de petit diamètre fixée à ladite autre partie de l'arbre primaire et une portion de grand diamètre sur toute la longueur de laquelle s'étendent les rainures ;
- chacune des rainures pratiquées en creux sur ladite première extrémité présente dans son fond une gorge d'accueil de l'un des bras du dispositif de couplage ;
- la machine électrique est à flux axial.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en coupe d'une partie d'un groupe motopropulseur conforme à l'invention ;
[Fig. 2] est une vue schématique en coupe de l'arbre de sortie de la machine électrique du groupe motopropulseur de la figure 1 et des moyens de transmission du couple de l'arbre de sortie ;
[Fig. 3] est une vue de face d'une coulisse à bille du groupe motopropulseur de la figure 1 ;
[Fig. 4] est une vue schématique en coupe selon les plans de coupe A-O et O-B de la figure 3 ;
[Fig. 5] est une vue schématique en coupe selon le plan de coupe C-C de la figure 3 ;
[Fig. 6] est une vue schématique en coupe selon le plan de coupe D-D de la figure 2.

### Dispositif

### - Machine électrique

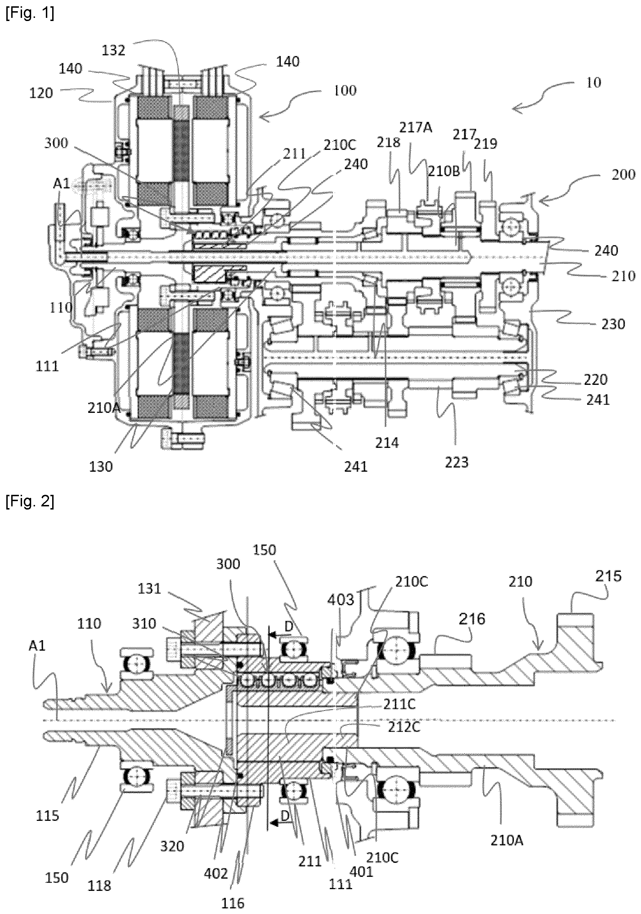

Sur la figure 1, on a représenté une partie d'un groupe motopropulseur 10.

Un tel groupe motopropulseur 10 est de préférence conçu pour être installé dans un véhicule automobile (voiture, camion...), bien qu'en variante, il pourrait être installé dans d'autres types d'installations.

Ce groupe motopropulseur 10 est de préférence hybride en ce sens qu'il comporte au moins deux motorisations, l'une électrique et l'autre thermique. En variante, il pourrait ne comporter qu'une seule motorisation électrique.

Il comporte ici une machine électrique 100, un moteur à combustion interne (non représenté) et un réducteur de vitesse 200.

La machine électrique 100 pourrait être du type à flux radial. Toutefois, de préférence, elle est du type à flux axial.

La machine électrique 100 ici employée comporte un carter 120 creux en deux parties boulonnées l'une sur l'autre, qui délimitent un logement à l'intérieur duquel se trouvent ici un rotor 130 et deux stators 140 disposés de part et d'autre du rotor 130.

Les stators 140 sont montés de manière fixe dans le carter 120. Ils présentent chacun une forme de disque percé en son centre et centré sur l'axe A1 du rotor 130 (ci-après appelé axe de rotation A1). Chacun de ces stators porte des enroulements de fils électriques qui permettent, lorsqu'ils sont alimentés en courant électrique, de générer un flux magnétique qui traverse le rotor 130 selon une direction sensiblement parallèle à l'axe de rotation A1. C'est la raison pour laquelle ce type de machine électrique est qualifié de machine à flux axial.

Le rotor 130 présente également une forme de disque percé en son centre. Il présente une épaisseur telle qu'un entrefer est ménagé entre chacune de ses deux faces circulaires et le stator 140 qui lui fait face.

En pratique, il comporte un moyeu central 131 (figure 2) et une frette périphérique 132 (figure 1) qui maintiennent entre eux des aimants (monoblocs ou formés d'une pluralité d'aimants unitaires) régulièrement répartis autour de l'axe de rotation A1.

Comme le montre la figure 2, le moyeu central 131 est boulonné sur un arbre de sortie 110 qui s'étend axialement selon l'axe de rotation A1.

Grâce à cette architecture, lorsque les stators 140 sont alimentés en courant électrique, ils forcent l'arbre de sortie 110 à pivoter autour de cet axe de rotation A1.

Ainsi la machine électrique est-elle en mesure de générer un couple moteur (lorsqu'elle est en mode moteur). A l'inverse, lorsque son arbre de sortie 110 est entrainé en rotation, elle peut se comporter en alternateur apte à générer un courant électrique (on parle de mode génératrice).

L'arbre de sortie 110 pourrait être réalisé d'une seule pièce monobloc.

Toutefois, de manière préférentielle, il comporte au moins deux parties boulonnées l'une sur l'autre, dont une partie principale 115 (à gauche sur la figure 2) et une bague 116 (à droite). Ces deux parties présentent, sur leurs faces extérieures, des brides pour leur fixation par des boulons 118.

Comme le montre également la figure 2, le rotor 130 est monté sur la partie principale 115 de l'arbre de sortie 110 et est fixé à celle-ci via les boulons 118.

Des roulements à billes 150 sont prévus autour de chacune de deux parties 115, 116 pour guider le pivotement de l'arbre de sortie 110 autour de l'axe de rotation A1.

Ici, la bague 116 est creuse. Elle présente plus précisément une forme globale de tube. Elle forme ainsi une extrémité creuse 111 pour l'arbre de sortie 110.

A ce stade de la description, on pourra noter que le carter 120 illustré sur la figure 1 délimite une chambre hermétique dans une partie de laquelle circule un fluide de refroidissement des parties statiques de la machine électrique 100 et de lubrification des parties mobiles du réducteur de vitesse 200.

Le carter 120 présente alors un conduit qui permet de faire communiquer une arrivée de fluide sous pression avec l'intérieur de l'arbre de sortie 110, lequel présente à cet effet un perçage central traversant. Le carter 120 présente également deux passages pour des conducteurs électriques permettant d'alimenter les stators.

### - Réducteur

Le réducteur de vitesse 200 est représenté sur la figure 1.

Il s'agit ici d'une boîte de vitesses mais en variante, il pourrait s'agir d'un réducteur à pignons mono-rapport, d'un réducteur à courroie, d'un variateur...

Ce réducteur 200 comprend un arbre primaire 210 par lequel arrive le couple généré par la machine électrique (en mode moteur) et par le moteur à combustion interne, et un arbre secondaire 220 qui tourne en général à une vitesse différente de celle de l'arbre primaire 210 et par lequel le couple est transmis aux roues du véhicule. Comme cela apparaîtra dans la suite, l'arbre primaire 210 n'est pas monobloc mais comporte deux parties indépendantes pouvant pivoter l'une par rapport à l'autre.

Ces deux arbres primaire 210 et secondaire 220 sont montés dans un carter 230 hermétique (composé de deux parties fixées ensemble), de façon à s'étendre selon des axes parallèles et à pouvoir librement pivoter autour de ces axes dans le carter 230.

L'arbre primaire 210 est plus particulièrement conçu pour s'étendre longitudinalement selon l'axe de rotation A1 et pivoter autour de cet axe.

Pour cela, l'arbre primaire 210 est supporté à ses deux extrémités par un roulement à billes 240 engagé dans le carter 230, tandis que l'arbre secondaire 220 porte à ses deux extrémités un roulement à rouleaux inclinés 241 engagé dans le carter 230.

L'arbre primaire présente une première extrémité 211 (à gauche sur la figure 1) par lequel l'une de ses parties est couplée à l'arbre de sortie 110 de la machine électrique 100, et une seconde extrémité (non visible) par laquelle une autre de ses parties est couplée au moteur à combustion interne.

La boîte de vitesses comporte plusieurs rapports pour le moteur à combustion interne et au moins un rapport pour la machine électrique 100 (elle en comporte préférentiellement plusieurs, ici deux).

L'arbre primaire 210 est alors formé de trois parties, dont un manchon 210C (à gauche), une partie creuse 210A (au centre) et une partie pleine 210B (à droite) qui est engagé en partie à l'intérieur de la partie creuse 210A. Ces parties sont montées de façon coaxiale dans le prolongement les unes des autres. Le manchon 210C est fixé (ici par un ajustement serré) dans la partie creuse 210A, tandis que la partie pleine 210B peut librement pivoter par rapport aux deux autres parties grâce à un roulement à rouleaux 214.

La partie creuse 210A et le manchon 210C de l'arbre primaire 210 sont couplés de manière permanente avec l'arbre de sortie 110 de la machine électrique 100.

La partie creuse 210A porte deux dentures fixes 215, 216 (figure 2) formant deux roues dentées qui engrènent des pignons fous portés par l'arbre secondaire 220 (figue 1). Un dispositif de crabotage monté sur l'arbre secondaire 220 permet de sélectionner l'une ou l'autre de ces deux roues dentées ou de déconnecter la machine électrique 100 de l'arbre secondaire 220.

La partie pleine 210B de l'arbre primaire 210 est quant à elle couplée avec le vilebrequin du moteur à combustion interne. Elle y est préférentiellement couplée de façon permanente, sans utiliser d'embrayage. Elle porte deux pignons fous 217, 218 qui engrènent des roues dentées portées par l'arbre secondaire 220. Un dispositif de crabotage 217A monté sur l'arbre primaire 210 permet de sélectionner l'un ou l'autre de ces pignons fous. La partie pleine 210B de l'arbre primaire 210 porte également un pignon fixe 219 qui coopère avec un pignon d'un troisième arbre, non représenté, ce qui permet notamment d'offrir d'autres rapports de vitesse et de connecter la boîte à un alterno-démarreur.

L'arbre secondaire 220 porte par ailleurs une denture fixe 223 par laquelle il peut transmettre son couple à un différentiel (non représenté) du véhicule automobile.

Comme le montre la figure 2, le manchon 210C présente une forme tubulaire, avec un conduit central permettant le passage du fluide de refroidissement et de lubrification.

Il présente, à une extrémité (droite sur les dessins), une portion de section plus réduite que le reste du manchon, par laquelle il est engagé en force à l'intérieur de la partie creuse 210A de l'arbre primaire 210.

### - Couplage

En résumé, comme le montre la figure 2, l'arbre de sortie 110 de la machine électrique 100 comporte une partie principale 115 et une bague 116 fixées ensemble, tandis que l'arbre primaire 210 de la boîte de vitesses comporte un manchon 210C et une partie creuse 210A fixées ensemble et montés rotatives sur une partie pleine 210B de cet arbre primaire 210.

De façon idéale, l'axe de l'arbre de sortie 110 de la machine électrique 100 et l'axe de l'arbre primaire 210 de la boîte de vitesses sont confondus (c'est d'ailleurs la raison pour laquelle ces deux axes sont ici appelés sous la même dénomination « axe de rotation A1 »).

Malheureusement, du fait de défauts de fabrication et d'assemblage ou du fait d'efforts qui s'exercent sur les différents composants du groupe motopropulseur 10, il arrive que ces axes ne soient pas exactement confondus, et qu'ils se décalent et/ou s'inclinent l'un par rapport à l'autre.

Il est alors prévu un dispositif de couplage 300 entre l'arbre de sortie 110 et l'arbre primaire 210 qui est particulier en ce sens qu'il permet de transmettre des couples très importants et de compenser ces défauts, c'est-à-dire d'éviter que des mouvements et efforts axiaux ne soient transmis par la boîte de vitesse à l'arbre de sortie 110 de la machine électrique 100.

Ce dispositif de couplage 300 comporte des éléments roulants 310 engagés dans des rainures 112, 212 pratiquées en creux sur la première extrémité 211 de l'arbre primaire 210 et à l'intérieur de l'extrémité creuse 111 de l'arbre de sortie 110. Ces rainures 112, 212 s'étendant longitudinalement selon des axes parallèles à l'axe de rotation A1 et forment donc des pistes pour les éléments roulants 310.

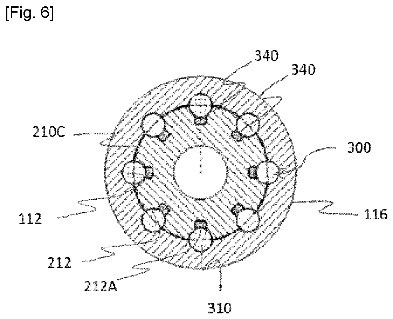

Plus précisément, comme le montre la figure 6, la bague 116 de l'arbre de sortie 110 de la machine électrique 100 présente des rainures 112 qui s'étendent en creux dans sa face interne, selon des axes longitudinaux parallèles les uns aux autres, et qui sont régulièrement réparties tout autour de l'axe de rotation A1.

Il est de préférence prévu entre trois et dix rainures 112 distinctes. Il en est ici prévu exactement huit.

Ces rainures 112 sont toutes identiques. Elles s'étendent sur toute la longueur de la bague 116 et sont profilées en ce sens que leurs sections transversales (dans des plans orthogonaux à l'axe de rotation A1) présentent une même géométrie d'une extrémité à l'autre de la bague 116.

Chaque section transversale de l'une des rainures 112 présente ici une forme d'arc-de-cercle. Le secteur angulaire de cet arc-de-cercle présente un angle d'ouverture compris entre 165° et 175°, de préférence de l'ordre de 170°.

Grâce à leur géométrie uniforme d'une extrémité à l'autre de la bague 116, ces rainures 112 forment des pistes pour les éléments roulants qui sont utilisables sur toute la longueur de la bague. Dès lors, il est possible de prévoir une bague de longueur réduite, ce qui accroît la compacité du groupe motopropulseur 10.

Comme le montre la figure 2, la première extrémité 211 de l'arbre primaire 210 de la boîte de vitesses (celle couplée à l'arbre de sortie 110) est formée par le manchon 210C.

Ainsi, c'est le manchon 210C qui présente sur sa face externe les rainures 212 dans lesquelles sont engagés les éléments roulants 310.

Ce manchon 210C présente une forme tubulaire avec une partie principale 211C de grand diamètre et une partie d'extrémité 212C de diamètre plus réduit.

Les rainures 212 s'étendent en creux dans la face externe de la partie principale 211C du manchon 210C, en parallèle les unes des autres, et sont régulièrement réparties tout autour de l'axe de rotation A1.

Il est prévu autant de rainures sur l'arbre primaire 210 que dans l'arbre de sortie 110.

Ici encore, ces rainures 212 sont toutes identiques et profilées, avec une section transversale en forme d'arc-de-cercle ayant un angle d'ouverture idéalement compris entre 165° et 175°.

Le diamètre de la partie d'extrémité 212C est ajusté de façon à pouvoir engager en force le manchon 210C dans la partie creuse 210A de l'arbre primaire 210.

Le diamètre de la partie principal 211C est quant à lui plus grand et est prévu de telle sorte que le cylindre géométrique qui est centré sur l'axe de rotation A1 et qui passe par le fond des rainures 212 présente un diamètre supérieur ou égal à celui de la partie d'extrémité 212C. Ainsi, ces rainures 212 débouchent à l'extérieur de cette partie d'extrémité 212C. Aussi, ces rainures 212 peuvent être réalisées sur toute la longueur de la partie principale 211C avec un outil simple (typiquement une seule fraise de forme adaptée) et présenter un profil uniforme sur toute la longueur de celle-ci. De cette façon, ces rainures 212 forment des pistes pour les éléments roulants qui sont utilisables d'une extrémité à l'autre de la partie principale 211C. Par conséquent, il est possible de prévoir un manchon 210C de longueur réduite, ce qui accroît la compacité du groupe motopropulseur 10.

### Coulisse

Comme le montrent les figures 2 à 5, le dispositif de couplage 300 de l'arbre de sortie 110 avec l'arbre primaire 210 comporte, outre les éléments roulants 310 déjà cités, un socle de maintien 320 de forme particulière, qui assure le blocage relatif en position des éléments roulants 310 dans les rainures 112, 212 des arbres.

A titre liminaire, on pourra préciser que de manière préférentielle, les éléments roulants 310 seront des billes sphériques.

Le socle de maintien 320 comporte une partie de jonction 330 à partir de laquelle s'étendent plusieurs bras 340 rectilignes et parallèles, qui portent chacun des moyens de retenu 350 d'au moins deux éléments roulants 310.

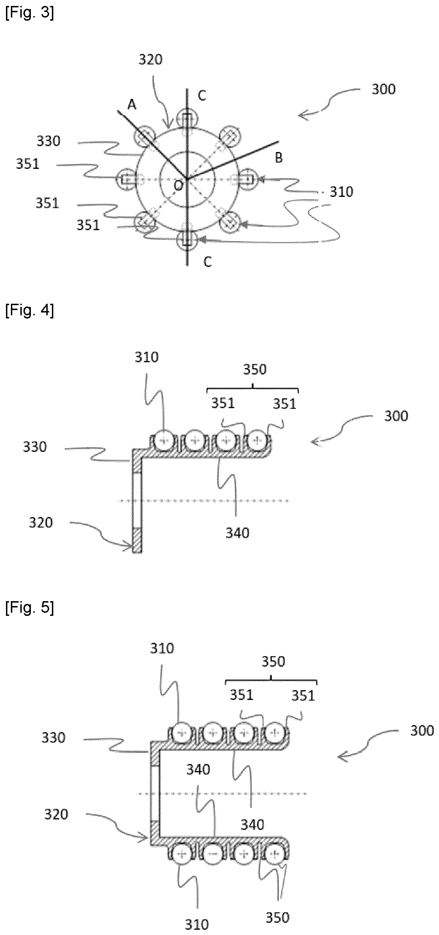

Ici, comme le montre bien les figures 3 à 5, la partie de jonction 330 présente une forme d'anneau plat. Elle délimite une ouverture centrale pour le passage du fluide de lubrification et de refroidissement.

Cette partie de jonction 330 est prévue pour se placer contre l'extrémité libre du manchon 210C de l'arbre primaire 210. Elle s'étend alors selon un plan orthogonal à l'axe de rotation A1.

Les bras 340 s'étendent alors à partir du bord périphérique de l'anneau plat, sur un même côté de celui-ci (ici côté droit).

Ils s'étendent parallèlement à l'axe de rotation A1.

On pourrait prévoir que ce bras se logent à la jonction entre les deux arbres de sortie 110 et primaire 210 (en s'interposant entre le manchon 210C et la bague 216).

Toutefois, ici, les bras sont prévus pour se loger dans des gorges prévues au fond des rainures 112, 212 de l'un de ces deux arbres.

Comme le montre très bien la figure 6, ils sont ici prévus pour se loger dans des gorges 212A préférentiellement prévues au fond des rainures 212 du manchon 210C de l'arbre primaire 210.

Ces gorges 212A sont profilées et présentent des dimensions égales, au jeu de montage près, aux dimensions des bras 340 du socle de maintien 320.

Les bras 340 et les gorges 212A présentent ici des sections transversales de formes rectangulaires.

Comme le montrent bien les figures 3 à 5, chaque bras 340 comporte préférentiellement quatre moyens de retenu 350 d'éléments roulants 310.

Ici, les éléments roulants étant des billes, le moyen de retenu 350 de chaque élément roulant 310 comporte deux doigts 351 placés de part et d'autre de l'élément roulant 310. Ces deux doigts 351 s'étendent en saillie de l'une des faces du bras (ici en saillie de la face externe).

Comme le montre la figure 3, chaque doigt 351 s'étend sur une largeur (selon une direction orthoradiale par rapport à l'axe de rotation A1) identique à la largeur du bras 340 qui le porte, de façon à ne pas déborder de celui-ci.

Par ailleurs, chaque doigt 351 s'étend sur une hauteur par rapport au bras (selon une direction radiale par rapport à l'axe de rotation A1) qui est supérieure au rayon des éléments roulants 310, mais inférieur au diamètre de ceux-ci. Ainsi, chaque élément roulant 310 peut être clipsé entre les deux doigts 351 qui l'enserrent, ce qui facilite ensuite la manipulation du dispositif de couplage 300.

Le socle de maintien 320 est de préférence réalisé d'une seule pièce. Il est ici réalisé en matière plastique. La matière plastique ainsi utilisée peut être typiquement la même que celle utilisée pour fabriquer des cages de roulements à billes standards.

Le nombre de bras 340 et de moyens de retenu 350 sur chaque bras 340 dépend du nombre d'éléments roulants utilisés. Le nombre de paires de doigts 351 est au moins supérieur à deux et ici égal à quatre par bras 340, le nombre de bras étant ici égal à huit.

Une fois les éléments roulants 310 installés dans les rainures 112 de l'arbre de sortie 110 et dans les rainures 212 correspondantes de l'arbre primaire 210 et maintenus par le socle de maintien 320, ils permettent de bien transmettre le couple d'un arbre à l'autre.

De manière préférentielle, les éléments roulants 310 sont montés avec un jeu radial dans les rainures, ce jeu étant inférieur à 0,1 mm.

Les éléments roulants 310 permettent en outre de ne transmettre aucun effort axial d'un arbre à l'autre (selon l'axe de rotation A1), même si les deux arbres sont légèrement désaxés. En effet, les rainures forment des pistes dans lesquelles les éléments roulants 310 peuvent rouler librement même lorsque les deux arbres sont désaxés de 0,1 mm ou inclinés de 0,1 degré.

Ainsi, le dispositif de couplage 300 forme une sorte de coulisse à billes.

Comme le montre la figure 2, cette coulisse à billes est préférentiellement montée dans l'arbre de sortie 110 de façon à être libre de coulisser dans ce dernier, avec un jeu de quelques millimètres.

Sa course est toutefois limitée, d'un côté, par la partie principale 115 de l'arbre de sortie 110, et de l'autre, par la partie creuse 210A de l'arbre primaire 210.

Comme cela a été mentionné supra, un fluide lubrificateur est prévu pour circuler à l'intérieur de la partie principale 115 de l'arbre de sortie 110.

Comme le montre la figure 3, ce fluide débouche sur la coulisse à billes, ce qui permet de la garder lubrifiée et de la refroidir.

Il est alors prévu des moyens d'étanchéité permettant d'éviter que le fluide qui provient de l'intérieur de l'arbre de sortie 110 puis huile et refroidit la coulisse à billes ne s'échappe autrement que par l'intérieur de la partie creuse 210A de l'arbre primaire 210.

Ces moyens d'étanchéité comportent tout d'abord un premier jeu de joints 401, 403 prévu sur la partie creuse 210A de l'arbre primaire 210 et à l'extrémité de la bague 116 de l'arbre de sortie 110, ce qui permet de garantir l'étanchéité entre l'arbre primaire 210 et l'arbre de sortie 110, à la droite de la coulisse à billes. Ce premier jeu comporte notamment une bague d'étanchéité 401 qui vient se placer à l'extrémité libre de la bague 116 de l'arbre de sortie 110.

Ces moyens d'étanchéité comportent aussi un second joint 402 situé entre la partie principale 115 et la bague 116 de l'arbre de sortie 110, et qui permet d'assurer une étanchéité à la gauche de la coulisse à billes.

### Procédé

L'assemblage du dispositif de couplage est alors réalisé de la manière suivante.

Au cours d'une première étape, le dispositif de couplage 300 est assemblé. Les éléments roulants 310 se trouvent alors chacun bloqués entre les deux doigts 351 qui l'enserrent.

Ce dispositif est ensuite engagé à l'intérieur de la bague 116. Il y est maintenu en position grâce à la bague d'étanchéité 401 précitée.

Plus tard, la boîte de vitesse peut être assemblée au moteur, en engageant le manchon 210C à l'intérieur du dispositif de couplage 300.

### Variantes

La présente invention n'est nullement limitée au mode de réalisation décrit et représenté, mais l'homme du métier saura y apporter toute variante conforme à l'invention.

A titre d'exemple, l'extrémité creuse pourrait appartenir à l'arbre primaire tandis que l'extrémité de l'arbre de sortie serait engagée à l'intérieur de cette extrémité creuse, le dispositif de couplage s'interposant radialement entre ces deux extrémités.

Encore à titre d'exemples, les éléments roulants pourraient présenter des formes différentes, par exemple des formes de rouleaux de longueurs très réduites.

## Revendications

1. Groupe motopropulseur (10) comportant :
- une machine électrique (100) qui comprend un arbre de sortie (110), et
- un réducteur de vitesse (200) comprenant un arbre primaire (210),
l'un des arbre de sortie (110) et arbre primaire (210) présentant une extrémité creuse (111) et l'autre des arbre de sortie (110) et arbre primaire (210) présentant une première extrémité (211) qui est engagée à l'intérieur de ladite extrémité creuse (111), **caractérisé en ce qu'**il comporte en outre un dispositif de couplage (300) des deux arbres primaire et de sortie (110, 210), comportant :
- des éléments roulants (310) engagés dans des rainures (112, 212) pratiquées en creux sur ladite première extrémité (211) et dans ladite extrémité creuse (111) des arbres primaire et de sortie (110, 210), et
- un socle de maintien (320) adapté à maintenir en position relative les éléments roulants (310) engagés dans les rainures (112, 212),
dans lequel :
lesdites rainures (112, 212) s'étendent longitudinalement selon des axes parallèles à un axe de rotation (A1) de l'arbre de sortie (110),
le socle de maintien (320) comporte une partie de jonction (330) à partir de laquelle s'étendent plusieurs bras (340) parallèles qui portent chacun au moins deux moyens de retenu (350) adaptés à maintenir en position relative deux éléments roulants (310),
et
l'extrémité creuse (111) est portée par l'arbre de sortie (110), lequel arbre de sortie (110) est formé d'au moins deux pièces (115, 116), dont l'une forme une bague (116) à l'intérieur de laquelle sont réalisées les rainures (112), lesdites rainures (112) s'étendant sur toute la longueur de la bague (116).

2. Groupe motopropulseur (10) selon la revendication précédente, dans lequel ladite partie de jonction (330) présente un bord périphérique à partir duquel s'étendent lesdits bras (340), lesquels bras (340) s'étendant tous sur un même côté de la partie de jonction (330).

3. Groupe motopropulseur (10) selon l'une des revendications précédentes, dans lequel le socle de maintien (320) comporte un nombre de bras (340) qui est au moins égal à trois, qui est préférentiellement au moins égal à six, et qui est de façon plus préférentielle encore égal à huit.

4. Groupe motopropulseur (10) selon l'une des revendications précédentes, dans lequel il est prévu un nombre d'éléments roulants (310) pour chaque bras (340) qui est compris entre trois et cinq, et qui est de préférence égal à quatre.

5. Groupe motopropulseur (10) selon l'une des revendications précédentes, dans lequel le moyen de retenu (350) de chaque élément roulant (310) comporte deux doigts (351) qui sont placés de part et d'autre de l'élément roulant (310) et qui s'étendent en saillie de l'une des faces du bras (340).

6. Groupe motopropulseur (10) selon l'une des revendications précédentes, dans lequel les rainures (112, 212) présentent, sur une partie au moins de leurs longueurs accueillant les éléments roulants (310), des sections uniformes en arc-de-cercle d'angles d'ouverture supérieures à 160°, de préférence compris entre 165° et 175°.

7. Groupe motopropulseur (10) selon l'une des revendications précédentes, dans lequel la première extrémité (211) est portée par l'arbre primaire (210), et dans lequel les rainures (212) sont réalisées sur un manchon (210C) qui est fixé sur une autre partie (210A) de l'arbre primaire (210), ledit manchon (210C) présentant une portion de petit diamètre fixée à ladite autre partie (210C) de l'arbre primaire (210) et une portion de grand diamètre sur toute la longueur de laquelle s'étendent les rainures (212).

8. Groupe motopropulseur (10) selon l'une des revendications précédentes, dans lequel chacune des rainures (212) pratiquées en creux sur ladite première extrémité (211) présente dans son fond une gorge (212A) d'accueil de l'un des bras (340) du dispositif de couplage (300).

9. Groupe motopropulseur (10) selon l'une des revendications précédentes, dans lequel la machine électrique (100) est à flux axial.

## Patentansprüche

1. Antriebsstrang (10), beinhaltend:
- eine elektrische Maschine (100), die eine Abtriebswelle (110) umfasst, und
- ein Untersetzungsgetriebe (200), das eine Primärwelle (210) umfasst,
wobei die eine unter der Abtriebswelle (110) und der Primärwelle (210) ein hohles Ende (111) aufweist und die andere unter der Abtriebswelle (110) und der Primärwelle (210) ein erstes Ende (211) aufweist, das in das hohle Ende (111) eingesetzt ist, **dadurch gekennzeichnet, dass** er ferner eine Kupplungsvorrichtung (300) zur Kupplung der beiden Primär- und Abtriebswellen (110, 210) beinhaltet, die Folgendes beinhaltet:
- Wälzkörper (310), die in Nuten (112, 212) eingesetzt sind, die an dem ersten Ende (211) und in dem hohlen Ende (111) der Primär- und der Abtriebswelle (110, 210) vertieft ausgebildet sind, und
- einen Haltesockel (320), der dazu angepasst ist, die in die Nuten (112, 212) eingesetzten Walzkörper (310) in relativer Position zu halten,
wobei:
die Nuten (112, 212) sich längs entlang von parallel zu einer Rotationsachse (A1) der Abtriebswelle (110) verlaufenden Achsen erstrecken,
der Haltesockel (320) einen Verbindungsteil (330) beinhaltet, von dem aus sich mehrere parallele Arme (340) erstrecken, die jeweils mindestens zwei Rückhaltemittel (350) tragen, die dazu angepasst sind, zwei Wälzkörper (310) in relativer Position zu halten, und
das hohle Ende (111) von der Abtriebswelle (110) getragen wird, wobei die Abtriebswelle (110) aus mindestens zwei Teilen (115, 116) gebildet wird, von denen das eine einen Ring (116) bildet, in dem die Nuten (112) ausgeführt sind, wobei sich die Nuten (112) über die gesamte Länge des Rings (116) erstrecken.

2. Antriebsstrang (10) nach dem vorhergehenden Anspruch, wobei der Verbindungsteil (330) einen Umfangsrand aufweist, von dem aus sich die Arme (340) erstrecken, wobei sich die Arme (340) alle auf einer selben Seite des Verbindungsteils (330) erstrecken.

3. Antriebsstrang (10) nach einem der vorhergehenden Ansprüche, wobei der Haltesockel (320) eine Anzahl von Armen (340) beinhaltet, die mindestens drei, die bevorzugt mindestens sechs und die noch bevorzugter acht beträgt.

4. Antriebsstrang (10) nach einem der vorhergehenden Ansprüche, wobei eine Anzahl von Walzkörpern (310) für jeden Arm (340) vorgesehen ist, die zwischen drei und fünf und die bevorzugt vier beträgt.

5. Antriebsstrang (10) nach einem der vorhergehenden Ansprüche, wobei das Rückhaltemittel (350) jedes Wälzkörpers (310) zwei Finger (351) beinhaltet, die beidseits des Wälzkörpers (310) platziert sind und die sich abstehend von einer Seite des Arms (340) erstrecken.

6. Antriebsstrang (10) nach einem der vorhergehenden Ansprüche, wobei die Nuten (112, 212) über mindestens einen Teil ihrer Längen, die die Wälzkörper (310) aufnehmen, gleichförmige Kreisbogenabschnitte mit Öffnungswinkeln von mehr als 160°, bevorzugt zwischen 165° und 175°, aufweisen.

7. Antriebsstrang (10) nach einem der vorhergehenden Ansprüche, wobei das erste Ende (211) von der Primärwelle (210) getragen wird und wobei die Nuten (212) auf einer Hülse (210C) ausgeführt sind, die an einem anderen Teil (210A) der Primärwelle (210) befestigt ist, wobei die Hülse (210C) einen Abschnitt mit kleinem Durchmesser aufweist, der an dem anderen Teil (210C) der Primärwelle (210) befestigt ist, und einen Abschnitt mit großem Durchmesser, über dessen gesamte Länge sich die Nuten (212) erstrecken.

8. Antriebsstrang (10) nach einem der vorhergehenden Ansprüche, wobei jede der Nuten (212), die an dem ersten Ende (211) vertieft ausgebildet sind, an ihrem Boden eine Rille (212A) zum Aufnehmen eines der Arme (340) der Kupplungsvorrichtung (300) aufweist.

9. Antriebsstrang (10) nach einem der vorhergehenden Ansprüche, wobei die elektrische Maschine (100) eine Axialflussmaschine ist.

## Claims

1. Powertrain (10) comprising:
- an electric machine (100) which comprises an output shaft (110), and
- a speed reducer (200) comprising a primary shaft (210),
one of the output shaft (110) and primary shaft (210) having a hollow end (111) and the other of the output shaft (110) and primary shaft (210) having a first end (211) which is engaged inside said hollow end (111), **characterized in that** it further comprises a coupling device (300) for coupling the two primary and output shafts (110, 210), comprising:
- rolling elements (310) engaged in grooves (112, 212) recessed into said first end (211) and into said hollow end (111) of the primary and output shafts (110, 210), and
- a holding base (320) designed to hold the rolling elements (310) engaged in the grooves (112, 212) in a relative position,
wherein:
said grooves (112, 212) extend longitudinally along axes parallel to an axis of rotation (A1) of the output shaft (110),
the holding base (320) comprises a joining portion (330) from which there extend a plurality of parallel arms (340) which each bear at least two retaining means (350) designed to hold two rolling elements (310) in a relative position, and
the hollow end (111) is borne by the output shaft (110), which output shaft (110) is formed from at least two parts (115, 116), one of which forms a ring (116) inside which the grooves (112) are formed, said grooves (112) extending over the entire length of the ring (116).

2. Powertrain (10) according to the preceding claim, wherein said joining portion (330) has a peripheral edge from which said arms (340) extend, which arms (340) all extend on one and the same side of the joining portion (330).

3. Powertrain (10) according to either of the preceding claims, wherein the holding base (320) has a number of arms (340) which is at least equal to three, which is preferably at least equal to six, and which is more preferably still equal to eight.

4. Powertrain (10) according to one of the preceding claims, wherein a number of rolling elements (310) for each arm (340), which is between three and five, and which is preferably equal to four, are provided.

5. Powertrain (10) according to one of the preceding claims, wherein the retaining means (350) for retaining each rolling element (310) comprises two fingers (351) which are placed on either side of the rolling element (310) and which project from one of the faces of the arm (340).

6. Powertrain (10) according to one of the preceding claims, wherein the grooves (112, 212) have, over at least part of their lengths receiving the rolling elements (310), uniform cross sections in the form of a circular arc with opening angles greater than 160°, preferably between 165° and 175°.

7. Powertrain (10) according to one of the preceding claims, wherein the first end (211) is borne by the primary shaft (210), and wherein the grooves (212) are formed on a sleeve (210C) which is fixed to another part (210A) of the primary shaft (210), said sleeve (210C) having a small-diameter portion fixed to said other part (210C) of the primary shaft (210) and a large-diameter portion along the entire length of which the grooves (212) extend.

8. Powertrain (10) according to one of the preceding claims, wherein each of the grooves (212) recessed into said first end (211) has in its bottom a slot (212A) for receiving one of the arms (340) of the coupling device (300).

9. Powertrain (10) according to one of the preceding claims, wherein the electric machine (100) is an axial-flux electric machine.
